# EUROPEAN PATENT APPLICATION

(11) **EP 4 726 801 A1**
(43) Date of publication of application: **15.04.2026**
(21) Application number: 25207634.4
(22) Date of filing: 09.10.2025
(51) Int. Cl.: H01M 4/131, H01M 4/133, H01M 4/62, H01M 4/1391, H01M 4/02, H01M 10/052

(54) **POSITIVE ELECTRODE ACTIVE MATERIALS, PREPARATION METHODS OF POSITIVE ELECTRODE ACTIVE MATERIALS, POSITIVE ELECTRODES, AND RECHARGEABLE LITHIUM BATTERIES**

(30) Priority: 11.10.2024 KR 20240138906; 02.10.2025 KR 20250145403
(71) Applicant: SAMSUNG SDI CO., LTD., Yongin-si, Gyeonggi-do 17084 (KR); POSTECH Research and Business Development Foundation, Pohang-si, Gyeongsangbuk-do 37673 (KR)
(72) Inventor: Shin, Dongwook, 17084 Yongin-si, Gyeonggi-do (KR); Park, Kyu-Young, 37673 Pohang-si, Gyeongsangbuk-do (KR); Lim, Jong-Heon, 37673 Pohang-si, Gyeongsangbuk-do (KR)
(74) Representative: Meissner Bolte Partnerschaft mbB

(57) **Abstract**

A positive electrode active material includes a lithium nickel-based composite oxide in a form of secondary particles, each of the secondary particles being formed by aggregated primary particles. A coating layer including amorphous carbon and carbon nanotubes is provided on surfaces of the secondary particles. The carbon nanotubes in the coating layer are randomly arranged on the surfaces of the secondary particles and physically interconnect the primary particles. The amorphous carbon in the coating layer is disposed between the secondary particles and the carbon nanotubes.

## Description

### BACKGROUND

### 1. Field

Positive electrode active materials, preparation methods of positive electrode active materials, positive electrodes, and rechargeable lithium batteries are disclosed.

This patent is a result of research conducted with the support of the Korea Institute for Advancement of Technology (RS-2024-00419413, 2024 Industrial Innovation Talent Growth Support Project) with funding from the government (Ministry of Trade, Industry and Energy) in 2024.

### 2. Description of the Related Art

Rechargeable lithium batteries with high energy density are used in portable information devices such as a cell phones, laptop computers, smart phones, and the like, Rechargeable lithium batteries are also used in electric vehicles because of their easy portability as a driving power source. Research has been conducted on use of rechargeable lithium batteries with high energy density as a driving power source in hybrid and electric vehicles or power storage power source.

Various positive electrode active materials have been investigated for rechargeable lithium batteries. Among them, lithium nickel-based oxide, lithium nickel manganese cobalt-based composite oxide, lithium nickel cobalt aluminum-based composite oxide, and lithium cobalt-based oxide are mainly used as positive electrode active materials. In recent years, high nickel-based positive electrode active materials having a nickel content of about 80 mol% or more have been developed with a capability of achieving high energy density. But such batteries often have various problems such as structural deterioration due to charges and discharges, surface side reactions with an electrolyte, deterioration due to particle cracking, and the like. Accordingly, development of positive electrode active materials capable of realizing high energy density and long cycle-life characteristics is still needed.

### SUMMARY

Provided is a positive electrode active material including a lithium nickel-based composite oxide that can realize high capacity while suppressing structural deterioration and crack occurrence after charge and discharge cycles and can have long cycle-life characteristics, a method for preparing the positive electrode active material, a positive electrode, and a rechargeable lithium battery.

The present invention provides a positive electrode active material including a lithium nickel-based composite oxide in a form of secondary particles, each of the secondary particles being formed by aggregated primary particles; and a coating layer on surfaces of the secondary particles and including amorphous carbon and carbon nanotubes; wherein the carbon nanotubes in the coating layer are randomly arranged on the surfaces of the secondary particles and physically interconnect the primary particles, and the amorphous carbon in the coating layer is disposed between the secondary particles and the carbon nanotubes.

The present invention further provides a method for preparing a positive electrode active material which includes: mixing carbon nanotubes, a cellulose-based dispersant, and a first solvent to prepare a mixed solution; adding a second solvent that does not mix with the first solvent to the mixed solution to form a Pickering emulsion; adding and mixing a lithium nickel-based composite oxide in a form of secondary particles in which primary particles are aggregated into the Pickering emulsion to prepare a mixture; and separating a lithium nickel-based composite oxide from the mixture and heat-treating the separated lithium nickel-based composite oxide.

The present invention further provides a positive electrode including a positive electrode current collector, and a positive electrode active material layer disposed on the positive electrode current collector and including the aforementioned positive electrode active material.

The present invention further provides a rechargeable lithium battery including the aforementioned positive electrode, a negative electrode, and an electrolyte.

The positive electrode active material may suppress structural collapse, and a positive electrode and a rechargeable lithium battery including the positive electrode active material can have improved battery performance.

### BRIEF DESCRIPTION OF THE DRAWINGS

FIGS. 1 to 4 are cross-sectional views of rechargeable lithium batteries according to some example embodiments.
FIG. 5 is an FE-SEM photograph (FE-SEM image) of the surface of positive electrode active material particles of an Example 1.
FIG. 6 is an FE-SEM photograph of a surface of positive electrode active material particles of Comparative Example 1.
FIG. 7 is an FE-SEM photograph of the surface of the positive electrode active material particles of Comparative Example 2.
FIG. 8A is an FE-SEM image of the surface of the positive electrode active material particles of Example 1 before one charge and discharge, FIG. 8B is an FE-SEM image of the surface of the positive electrode active material particles of Example 1 after one charge, and FIG. 8C is an FE-SEM image of the surface of the positive electrode active material particles of Example 1 after one charge and discharge.
FIG. 9A is an FE-SEM image of the surface of the positive electrode active material particles of Comparative Example 1 before one charge and discharge, FIG. 9B is an FE-SEM image of the surface of the positive electrode active material particles of Comparative Example 1 after one charge, and FIG. 9C is an FE-SEM image of the surface of the positive electrode active material particles of Comparative Example 1 after one charge and discharge.
FIG. 10 is a graph showing the change in capacity according to the number of cycles of the rechargeable lithium battery cells manufactured in Example 1, Comparative Example 1, and Reference Examples 1 and 2.
FIG. 11 is a graph showing the capacity retention rate according to the number of cycles of the rechargeable lithium battery cells manufactured in Example 1 and Comparative Example 1.
FIG. 12 is a photograph showing an evaluation of positive electrode active material particle fracture shape according to the number of cycles by performing X-ray transmission analysis (nano computer tomography, nano CT) on the electrodes of the rechargeable lithium battery cells manufactured in Example 1 and Comparative Example 1.
FIGS. 13 and 14A to 14D are graphs showing the evaluation of the crystal structure of positive electrode active material particles through high resolution powder diffraction (HRPD) analysis after charge and discharge of the rechargeable lithium battery cells manufactured in Example 1 and Comparative Example 1.
FIG. 15 is a graph showing the analysis of the components at the surface of the positive electrode active material particle using time of flight-secondary ion mass spectrometry (TOF-SIMS) after charging and discharging of the rechargeable lithium battery cells manufactured in Example 1 and Comparative Example 1.
FIGS. 16A and B are scanning electron microscope photographs showing the electrode thickness of the rechargeable lithium battery manufactured in Comparative Example 1 after charging and discharging.
FIGS. 17A and B are scanning electron microscope photographs showing the electrode thickness of the rechargeable lithium battery cell manufactured in Example 1 after charging and discharging.
FIG. 18 is a graph showing the long-term cycle-life evaluation illustrating the capacity according to the number of cycles of the rechargeable lithium battery cells manufactured in Example 1 and Comparative Example 1.
FIG. 19 is a graph showing the long-term cycle-life evaluation at high current density illustrating the capacity according to the number of cycles of the rechargeable lithium battery cells manufactured in Example 1 and Comparative Example 1.

### DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Here, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter (D₅₀) may mean the diameter of particles having a cumulative volume of 50 volume% in the particle size distribution. As used herein, when a definition is not otherwise provided, the average particle diameter (D₅₀) means a diameter of particles having a cumulative volume of 50 volume% in the particle size distribution that is obtained by measuring the size (diameter or major axis length) of about 20 particles at random in a scanning electron microscope image.

Here, "or" is not to be construed as an exclusive meaning, for example, "A or B" is construed to include A, B, A+B, and the like.

"Metal" is to be interpreted as a concept including ordinary metals, transition metals and metalloids (semi-metals).

### Positive Electrode Active Material

In some example embodiments, a positive electrode active material includes a lithium nickel-based composite oxide in a form of secondary particles in which a plurality of primary particles are aggregated; and a coating layer on surfaces of the secondary particles and including amorphous carbon and carbon nanotubes. The carbon nanotubes in the coating layer may be randomly arranged on the surfaces of the secondary particles and physically interconnect the primary particles. The amorphous carbon in the coating layer may be disposed between the secondary particles and the carbon nanotubes.

Lithium nickel-based composite oxides may generally have a secondary particle form in which a plurality of primary particles are aggregated. As a secondary battery (e.g., rechargeable lithium battery) including the secondary particles is repeatedly charged and discharged, the lithium nickel-based composite oxides experience repeated volume expansion of their crystal structure, which causes gaps between the primary particles to widen, thereby misaligning the arrangement of the primary particles. This in turn causes a large difference in the degree of shrinkage and expansion of the secondary particles and the shrinkage and expansion of a positive electrode including the secondary particles. The shrinkage and expansion can cause structural cracking and destruction of secondary particles and the positive electrode, can induce disconnection of the electrochemical charge transfer network, can cause charge imbalance, can increase an area for side reactions with an electrolyte, and can causes deterioration of the charge/discharge cycle-life.

In order to prevent such problems, techniques for coating carbon-based materials on the surface of lithium nickel-based composite oxides are known. Among the techniques, graphene coating technology is often used. But the graphene may cover the entire surface of the lithium nickel-based composite oxide, which hinders the movement of lithium ions between the surface of the positive electrode active material and the electrolyte, which in turn may deteriorate the high-capacity, high-output, and long cycle-life characteristics. However, the positive electrode active material according to some example embodiments of the present disclosure does not cover the entire surface of the lithium nickel-based composite oxide because carbon nanotubes are used for the coating. Thus, there may be no problem of hindering lithium ion movement between the surface of the positive electrode active material and the electrolyte. And because the carbon nanotubes physically interconnect the primary particles of the lithium nickel-based composite oxide in the form of secondary particles, the arrangement of the primary particles may be prevented from becoming misaligned, such as when gaps are formed between the primary particles opening due to charge and discharge. Thus, the form of the secondary particles can be maintained. Further, shrinkage and expansion of the secondary particles and the positive electrode may be suppressed, thereby improving the battery cycle-life characteristics.

Amorphous carbon may be further included between the lithium nickel-based composite oxide and the carbon nanotubes. The amorphous carbon acts as an adhesive that allows the carbon nanotubes to be attached to the surface of the lithium nickel-based composite oxide, thereby allowing the carbon nanotubes to be more strongly attached to the lithium nickel-based composite oxide. This further improves the effect of maintaining the secondary particle shape and suppressing shrinkage and expansion of the secondary particles and the positive electrode.

### Lithium Nickel-based Composite Oxide

The lithium nickel-based composite oxide according to some example embodiments of the present disclosure has a secondary particle form in which a plurality of primary particles are aggregated. The secondary particles may be spherical, elliptical, polyhedral, or irregular in shape, and the primary particles may be spherical, elliptical, plate-shaped, or a combination thereof.

The average particle diameter (D₅₀) of the secondary particles of the lithium nickel-based composite oxide may be about 2 µm to about 20 µm, for example about 4 µm to about 16 µm, or about 6 µm to about 15 µm. The average particle diameter (D₅₀) may be obtained by randomly measuring the size (diameter or major axis length) of about 20 particles from a scanning electron microscope image of lithium nickel-based composite oxide particles to obtain a particle size distribution, and taking the diameter of particles having a cumulative volume of 50 volume% from the particle size distribution as the average particle diameter.

The average particle diameter (D₅₀) of the primary particles forming the secondary particles of the lithium nickel-based composite oxide may be less than or equal to about 3 µm, and may be, for example, about 100 nm to about 2 µm, about 100 nm to about 1 µm, about 200 nm to about 800 nm, or about 300 nm to about 700 nm. The average particle diameter of the primary particles may be obtained by randomly measuring the size (diameter or major axis length) of about 20 primary particles from a scanning electron microscope or transmission electron microscope image of the surface of the secondary particles to obtain a particle size distribution, and taking the size of particles having a cumulative volume of 50 volume% from the particle size distribution as the average particle diameter. When the size of the primary particles is in the above-described ranges, the positive electrode active material can be provided with high initial charge/discharge capacity and efficiency and excellent output characteristics and cycle-life characteristics.

The lithium nickel-based composite oxide may be, for example, represented by Chemical Formula 1.

[Chemical Formula 1]: Liₐ₁Niₓ₁M¹_{y1}M²_{z1}O_{2-b1}X_{b1}

In Chemical Formula 1, 0.9≤a1≤1.2, 0.8≤x1<1, 0<y1≤0.2, 0≤z1≤0.2, 0.9≤x1+y1+z1≤1.1, and 0≤b1≤0.1, M¹ and M² are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr, and X is one or more elements selected from F, P, and S. M¹ and M² may be different elements. In one embodiment, 0.85≤x1<1, 0<y1≤0.15, and 0≤z1≤0.15; in another embodiment 0.9≤x1<1, 0<y1≤0.1, and 0≤z1≤0.1.

As specific examples, the lithium nickel-based composite oxide may be represented by the Chemical Formula 2 or Chemical Formula 3.

[Chemical Formula 2]: Liₐ₂Nix₂Coy₂M³_{z2}O_{2-b2}X_{b2}

In Chemical Formula 2, 0.9≤a2≤1.2, 0.8≤x2<1, 0<y2≤0.2, 0≤z2≤0.2, 0.9≤x2+y2+z2≤1.1, and 0≤b2≤0.1, M³ is one or more elements selected from Al, B, Ba, Ca, Ce, Cr, Cu, Fe, Mg, Mn, Mo, Nb, Si, Sn, Sr, Ti, V, W, Y, Zn, and Zr, and X is F, P, S, or a combination thereof. In one embodiment, in Chemical Formula 2, 0.9≤x2≤0.99, 0.01≤y2≤0.1, and 0≤z2≤0.1.

[Chemical Formula 3]: Liₐ₃Niₓ₃Co_{y3}M⁴_{z3}M⁵_{w3}O_{2-b3}X_{b3}

In Chemical Formula 3, 0.9≤a3≤1.2, 0.8≤x3≤0.98, 0.01≤y3≤0.19, 0.01≤z3≤0.19, 0≤w3≤0.19, 0.9≤x3+y3+z3+w3≤1.1, and 0≤b3≤0.1, M⁴ is Al, Mn, or a combination thereof, M⁵ is one or more elements selected from B, Ba, Ca, Ce, Cr, Cu, Fe, Mg, Mo, Nb, Si, Sn, Sr, Ti, V, W, Y, Zn, and Zr, and X is F, P, S or a combination thereof. In one embodiment, in Chemical Formula 3, 0.9≤x3≤0.98, 0.01≤y3≤0.09, 0.01≤z3≤0.09, and 0≤w3≤0.09.

In the lithium nickel-based composite oxide, a nickel content based on 100 mol% of the total metal excluding lithium may be greater than or equal to about 80 mol%, for example, greater than or equal to about 85 mol%, greater than or equal to about 90 mol%, greater than or equal to about 91 mol%, greater than or equal to about 94 mol%, or less than or equal to about 99 mol%. When the nickel content is in these ranges, high capacity and high energy density may be achieved.

### Coating Layer

The coating layer according to some example embodiments includes amorphous carbon and carbon nanotubes.

A thickness of the coating layer may be about 1 nm to about 300 nm, for example about 30 nm to about 200 nm, or about 50 nm to about 200. The thickness of the coating layer may be measured through, for example, Time-of-flight secondary ion mass spectrometry (TOF-SIMS), X-ray photoelectron spectroscopy (XPS, or energy dispersive spectroscopy (EDS) analysis, and the thickness range of the coating layer may be measured through transmission electron microscopy - energy dispersive spectroscopy (TEM-EDS) line profile. When the thickness of the coating layer satisfies the above ranges, the mechanical properties of the coating layer including carbon nanotubes may be enhanced, thereby improving the cycle-life characteristics of the positive electrode active material. If the thickness of the coating layer exceeds the above ranges, the coating layer may act as a resistance element that impedes the movement of lithium ions to the positive electrode active material, resulting in a decrease in capacity.

Amorphous carbon is carbon that has no crystallinity or very low crystallinity, and is distinguished from crystalline carbon or graphitic carbon. The amorphous carbon may include a carbide of a cellulose derivative. The carbide of the cellulose derivative is an amorphous carbon material formed when a cellulose derivative undergoes a heat treatment or carbonization process. The type of the carbide of the cellulose derivative is not limited as long as it includes an alkyl group and a functional group capable of forming a hydrogen bond. For example, the carbide of the cellulose derivative may include a carbide of ethyl cellulose, a carbide of acetic cellulose, a carbide of hydroxypropyl cellulose, a carbide of methyl cellulose, a carbide of nitrocellulose, or a combination thereof.

The amorphous carbon is disposed between the lithium nickel-based composite oxide and the carbon nanotubes and acts as an adhesive that attaches the carbon nanotubes to the surface of the lithium nickel-based composite oxide. Thus, the carbon nanotubes are more strongly attached to the lithium nickel-based composite oxide, thereby further maintaining the secondary particle shape and suppressing shrinkage and expansion of the secondary particles and the positive electrode.

The amorphous carbon may be included in an amount of about 0.1 wt% to about 3 wt%, for example, about 0.1 wt% to about 1.5 wt%, about 0.2 wt% to about 1.0 wt%, or about 0.3 wt% to about 0.8 wt% based on 100 wt% of the positive electrode active material. Additionally, the amorphous carbon may be included in an amount of about 0.5 wt% to about 70 wt%, for example, about 5 wt% to about 60 wt%, about 10 wt% to about 60 wt%, or about 20 wt% to about 60 wt% based on 100 wt% of the coating layer.

The carbon nanotubes are randomly arranged on the surfaces of secondary particles of a lithium nickel-based composite oxide. In some examples, the carbon nanotubes may be present in a three-dimensional net shape or spider web shape on the surfaces of the secondary particles.

A carbon nanotube is a highly crystalline carbon material in which carbon atoms are arranged in a hexagonal arrangement to form a tube shape. Carbon nanotubes have excellent electrical conductivity and lithium ionic conductivity. Therefore, with the inclusion of carbon nanotubes, the cycle characteristics may be significantly improved by maintaining a uniform current and voltage distribution within a positive electrode during the charge and discharge cycles, and the output characteristics of the battery may be improved due to the improved conductivity. In addition, because carbon nanotubes are made up of carbon atoms with strong covalent bonds, they have excellent tensile strength and high resistance to destruction, and thus can greatly improve battery safety.

The carbon nanotubes in the coating layer may be provided independently in the form of a single fiber or a bundle of fibers, and the carbon nanotubes may be provided in a form that is connected through point contact or point surface. Additionally, carbon nanotubes adjacent to each other within the coating layer may be spaced apart from each other to have space between them. The space between the carbon nanotubes in the coating layer allows lithium ions to move freely between the surface of the positive electrode active material and the electrolyte, thereby enabling the implementation of high capacity, high output, and long cycle-life characteristics.

The ratio of the area of the carbon nanotubes relative to the total area of the coating layer may be about 1% to about 20%, or for example, about 2% to about 10%. The ratio of the area of the carbon nanotubes relative to the total area of the coating layer can be measured according to the threshold classification method through surface scanning electron microscope (SEM) analysis. When the ratio of the area of the carbon nanotubes relative to the total area of the coating layer is in the above ranges, the contact characteristics of the primary particles do not deteriorate. For example, the gap between the primary particles opening due to charge and discharge can be suppressed without impeding the movement of lithium ions between the positive electrode active material and the electrolyte, thereby maintaining the secondary particle shape. Further, shrinkage and expansion of the secondary particles and the positive electrode can be suppressed, thereby improving the battery cycle-life characteristics.

The carbon nanotubes in embodiments of the present disclosure may include single-walled carbon nanotubes (SWCNT), multi-walled carbon nanotubes (MWCNT), or a combination thereof. When multi-walled carbon nanotubes are used as the carbon nanotubes, the cost can usually be lower as compared to when single-walled carbon nanotubes are used.

The average diameter of the carbon nanotubes may be about 1 nm to about 50 nm, for example, about 1 nm to about 40 nm, about 1 nm to about 30 nm, about 1 nm to about 20 nm, or about 1 nm to about 10 nm. The average diameter of the carbon nanotubes may be an average value of the diameter of the thickest part measured by observing 10 or more carbon nanotubes using a transmission electron microscope (TEM). When the average diameter of the carbon nanotube satisfies the above ranges, the mechanical properties of the coating layer can be enhanced by the elastic properties of the carbon nanotubes.

The average aspect ratio of the carbon nanotubes may be about 100 to about 50,000, for example, about 500 to about 40,000, about 5,000 to about 30,000, or about 10,000 to about 25,000. The average aspect ratio of the carbon nanotubes is a ratio of the average length to the average diameter (average length/average diameter ratio). The average aspect ratio of the carbon nanotubes may be calculated by measuring the average diameter and average length and dividing the average length by the average diameter. Here, the average diameter can be measured in the same manner as the above measurement method, and the average length may be an average value of the length measured by observing 10 or more carbon nanotubes using a scanning electron microscope (SEM). When the aspect ratio of the carbon nanotubes satisfies the above ranges, the ratio of the surface of the positive electrode active material that is covered by carbon nanotube of the same weight can be increased, thereby providing the entire surface of the positive electrode active material the effect of coating.

The carbon nanotubes may be included in an amount of about 0.1 wt% to about 3 wt%, for example, about 0.1 wt% to about 2 wt%, about 0.1 wt% to about 1 wt%, or about 0.1 wt% to about 0.7 wt% based on 100 wt% of the positive electrode active material. Additionally, the carbon nanotubes may be included in an amount of about 20 wt% to about 99 wt%, for example, about 30 wt% to about 90 wt%, about 30 wt% to about 80 wt%, or about 30 wt% to about 70 wt% based on 100 wt% of the coating layer.

The coating layer may further include a cellulose derivative. The cellulose derivative may be a cellulose derivative that remains without being carbonized by heat treatment during the preparation of the positive electrode active material. The cellulose derivative includes an alkyl group, and its type is not limited as long as it includes a functional group capable of forming a hydrogen bond. The cellulose derivative may include, for example, ethyl cellulose, cellulose acetate, hydroxypropyl cellulose, methyl cellulose, nitrocellulose, or a combination thereof.

The cellulose derivative in the coating layer may be included in an amount of about 0.1 wt% to about 50 wt%, for example, about 0.5 wt% to about 30 wt%, about 1 wt% to about 20 wt%, or about 5 wt% to about 15 wt% based on 100 wt% of the coating layer.

According to some example embodiments, a positive electrode active material includes the aforementioned lithium nickel-based composite oxide and the aforementioned coating layer. As such, even after repeated charging and discharging, gaps between primary particles do not widen and the shape of the secondary particles and the shape of the positive electrode can be maintained.

According to some example embodiments, the average distance between the primary particles at the surfaces of the secondary particles of the positive electrode active material after one charge and discharge may be less than or equal to about 20 nm, for example, less than or equal to about 18 nm, less than or equal to about 16 nm, less than or equal to about 14 nm, less than or equal to about 12 nm, less than or equal to about 10 nm, or less than or equal to about 9 nm. The lower limit is not limited because the narrower the average gap between the primary particles, the more the shape of the secondary particles and the shape of the positive electrode are maintained. The average distance between the primary particles at the surface of the secondary particles of the positive electrode active material may be measured after the positive electrode active material was charged at a constant current of 0.1 C until reaching 4.3 V, subsequently maintained at a constant voltage of 4.3 V with a cut-off at a current of 0.05 C, and then discharged at a constant current of 0.1 C until reaching 3.0 V at 25°C. For the purposes of this specification, the statement that the positive electrode active material was charged and discharged shall be construed as referring to the charging and discharging of a lithium secondary battery comprising the positive electrode active material.

### Method of Preparing Positive Electrode Active Material

A method according to the invention of preparing a positive electrode active material includes: mixing carbon nanotubes, a cellulose-based dispersant, and a first solvent to prepare a mixed solution; adding a second solvent that does not mix with the first solvent to the mixed solution to form a Pickering emulsion; adding and mixing a lithium nickel-based composite oxide in a form of secondary particles in which primary particles are aggregated into the Pickering emulsion to prepare a mixture; and separating a lithium nickel-based composite oxide from the mixture and heat-treating the separated lithium nickel-based composite oxide.

First, a mixed solution is prepared by mixing carbon nanotubes, a cellulose-based dispersant, and a first solvent.

Because the carbon nanotubes are the same as those described in the positive electrode active material, further description of the carbon nanotubes is omitted below.

The cellulose-based dispersant includes an alkyl group, and the type of cellulose-based dispersant is not limited as long as it contains a functional group capable of forming a hydrogen bond. For example, the cellulose-based dispersant may include ethyl cellulose, cellulose acetate, hydroxypropyl cellulose, methyl cellulose, nitrocellulose, or a combination thereof. By including the cellulose-based dispersant, the carbon nanotubes may be evenly dispersed without agglomeration in the first solvent. A weight ratio of the carbon nanotubes to the cellulose-based dispersant may be about 10:90 to about 99:1, about 15:85 to about 98:2, about 15:85 to about 95:5, or about 15:85 to about 90:10. If the weight ratio of the carbon nanotubes to the cellulose-based dispersant satisfies is in the above ranges, agglomeration of the carbon nanotubes can be minimized and the carbon nanotubes can be uniformly coated on the surface of the positive electrode active material.

The first solvent may include acetonitrile, heptane, water, acetic acid, methanol, ethanol, acetone, dimethyl sulfoxide, benzene, hexane, chloroform, toluene, or a combination thereof.

The carbon nanotubes and the cellulose-based dispersant is mixed with the first solvent to prepare a mixed solution to prevent aggregation of the carbon nanotubes due to Van der Waals forces through a hydrogen bond of the carbon nanotubes with the cellulose-based dispersant. The mixed solution is such that the carbon nanotubes are well-dispersed in the first solvent.

Subsequently, the second solvent that does not mix well with the first solvent is added to the mixed solution to form the Pickering emulsion. The second solvent may a different solvent that does not mix with the first solvent. The second solvent may include hexane, heptane, acetonitrile, cyclohexane, isooctane, pentane, water, benzene, chloroform, or a combination thereof.

The first solvent in the mixed solution and the second solvent are not mixed each other but form the Pickering emulsion. The carbon nanotubes and the cellulose-based dispersant may function as a stabilizer on the interface of the first solvent and the second solvent. Specifically, the cellulose-based dispersant forms a hydrogen bond on the interface and is physically adsorbed on the carbon nanotube interface to provide stability to the Pickering emulsion. The Pickering emulsion has droplets with internal and external solvents that are determined by amounts of the solvents, wherein the internal solvent may be one solvent with a relatively smaller amount, while the external solvent may be the other solvent with a relatively larger amount. Depending on types of the internal and external solvents of the droplets, there may be differences in characteristics of dispersing the carbon nanotubes, sizes of the droplets in the Pickering emulsion, dispersion characteristics of the dispersant, uniformity of the coating, and the like.

The first solvent and the second solvent may have a volume ratio of about 50:50 to about 99:1, for example, about 60:40 to about 98:2, about 70:30 to about 95:5, or about 80:20 to about 90:10. Herein, the first solvent may be included in a larger amount than the second solvent and, thus, exist in the external solvent of the Pickering emulsion droplets. The second solvent may be included in a smaller amount than the first solvent and, thus, exist in the internal solvent of the Pickering emulsion droplet.

The Pickering emulsion droplets may have an average size of about 0.5 µm to about 30 µm, for example, about 1 µm to about 25 µm, about 2 µm to about 20 µm, or about 3 µm to about 15 µm. The average size of the Pickering emulsion droplets may be measured by an optical microscope analysis method and vary depending on the volume ratio of the first and second solvents. If the average size of the Pickering emulsion is in these ranges, the carbon nanotubes may be easily coated on the lithium nickel-based composite oxide particle surfaces.

The first and second solvents may have different boiling points. In some embodiments, the second solvent may have a lower boiling point than the first solvent. For example, the first solvent may have a boiling point of about 70 °C to about 100 °C, while the second solvent may have a boiling point of about 50 °C to about 70 °C. Because the second solvent has a lower boiling point than the first solvent, the second solvent (a droplet internal solvent) may be selectively removed by fractional distillation (described below) so that the carbon nanotubes may uniformly exist on the lithium nickel-based composite oxide.

Because the method for forming the Pickering emulsion is known, specific details of the Pickering emulsion are omitted.

Subsequently, the lithium nickel-based composite oxide in the form of secondary particles in which the primary particles are aggregated is added to and mixed with the Pickering emulsion to prepare a mixture. The lithium nickel-based composite oxide in the form of secondary particles in which the primary particles are aggregated is the same as described in the positive electrode active material. Thus, further description of the lithium nickel-based composite oxide particles will not described hereinafter.

When the lithium nickel-based composite oxide is added to and mixed with the Pickering emulsion to prepare the mixture, the lithium nickel-based composite oxide may be inserted into the Pickering emulsion droplets. After adding the lithium nickel-based composite oxide, the mixing may be performed according to a known method, for example, by stirring or vortexing. The mixing may be performed at a speed of about 100 rpm to about 2,000 rpm.

The method may further include removing an internal solvent of Pickering emulsion droplets through fractional distillation. The internal solvent may be removed after the adding and mixing of the lithium nickel-based composite oxide to prepare the mixture and before the separating and heat-treating of the lithium nickel-based composite oxide.

The fractional distillation may be performed at an appropriate pressure and temperature so that only the internal solvent of the droplets may be removed. For example, the fractional distillation may be performed at a pressure of about 100 mbar to about 800 mbar and a temperature of about 30 °C to about 100 °C. As the fractional distillation is performed at the controlled pressure and temperature, the second solvent (which is the internal solvent of the droplets) may be selectively removed so that the carbon nanotubes may uniformly exist on the lithium nickel-based composite oxide. Performing the fractional distillation after adding and mixing the lithium nickel-based composite oxide may prevent the Pickering emulsion droplets from rupturing prematurely.

Subsequently, the lithium nickel-based composite oxide may be separated from the mixture and then heat-treated. The process of separating the lithium nickel-based composite oxide from the mixture may be performed using a vacuum filtration or centrifugation method. Herein, on the surface of the separated lithium nickel-based composite oxide, the carbon nanotubes and the cellulose-based dispersant may be present. The cellulose-based dispersant may interfere with lithium ion and electron transport. Thus, the cellulose-based dispersant may need to be removed.

The heat treatment may remove the cellulose-based dispersant remaining on the surface of the separated lithium nickel-based composite oxide. The heat treatment process may be compatible with annealing conditions of the lithium nickel-based composite oxide and the cellulose-based dispersant. The heat treatment may be performed at about 150 °C to about 800 °C under a vacuum or specific gas atmosphere. The specific gas may be oxygen, argon, air, nitrogen, and the like. The pressure of the specific gas may be, for example, 1 atm. Most of the cellulose-based dispersant remaining on the surface of the lithium nickel-based composite oxide may be carbonized under the heat treatment temperature and atmosphere conditions. The carbonized cellulose-based dispersant may be in the form of carbide and serve as a type of adhesive as a type of amorphous carbon between the surface of the lithium nickel-based composite oxide and the carbon nanotubes. Thus, the carbon nanotubes may be more strongly adhered to the lithium nickel-based composite oxide.
in a positive electrode active material prepared according to the above-described method, the carbon nanotubes are randomly arranged on the secondary particle surfaces of the lithium nickel-based composite oxide and physically interconnect primary particles, and the amorphous carbon functions as an adhesive between the carbon nanotubes and the secondary particles of the lithium nickel-based composite oxide to prevent misalignment during the repeated charges and discharges. Thus, shapes of the secondary particles may be mainted and a positive electrode may be prevented from deterioration of charge/discharge cycle-life characteristics.

### Positive Electrode

Preferably, a positive electrode includes a positive electrode current collector, and a positive electrode active material layer disposed on the positive electrode current collector and including the aforementioned positive electrode active material. The positive electrode can have high capacity while suppressing structural deterioration and crack occurrence from charging and discharging, and the positive electrode can thereby have long cycle-life characteristics.

### Positive Electrode Current Collector

The positive electrode current collector is not particularly limited as long as it has conductivity and does not cause a chemical change in the rechargeable lithium battery. In some examples, the positive electrode current collector may be an aluminum foil or a stainless steel foil having a thickness of about 10 µm to about 15 µm.

### Positive Electrode Active Material Layer

The positive electrode active material layer includes the aforementioned positive electrode active material. The specific details of the positive electrode active material are as described above. An amount of the positive electrode active material may be about 60 wt% to about 99.9 wt%, about 70 wt% to about 99.8 wt%, about 80 wt% to about 99.8 wt%, 90 wt% to about 99.8 wt%, 92 wt% to about 99 wt%, or about 90 wt% to about 98 wt% based on 100 wt% of the positive electrode active material layer.

The positive electrode active material layer may optionally include a binder, a conductive material, or a combination thereof.

The binder improves binding properties of positive electrode active material particles with each other and with a positive electrode current collector. Examples of binders include polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like. But the present disclosure is not limited to these examples.

The conductive material is included to provide electrode conductivity and any electrically conductive material may be used as a conductive material that does not cause a chemical change in a secondary battery. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

In the positive electrode active material layer, an amount of the binder may be about 0.1 wt% to about 5 wt% based on 100 wt% of the positive electrode active material layer and an amount of the conductive material may be about 0.1 wt% to about 5 wt% based on 100 wt% of the positive electrode active material layer.

### Rechargeable Lithium Battery

A rechargeable lithium battery according to the invention includes the aforementioned positive electrode, negative electrode, and electrolyte. The rechargeable lithium battery may include a positive electrode, a negative electrode, a separator between the positive electrode and the negative electrode, and an electrolyte.

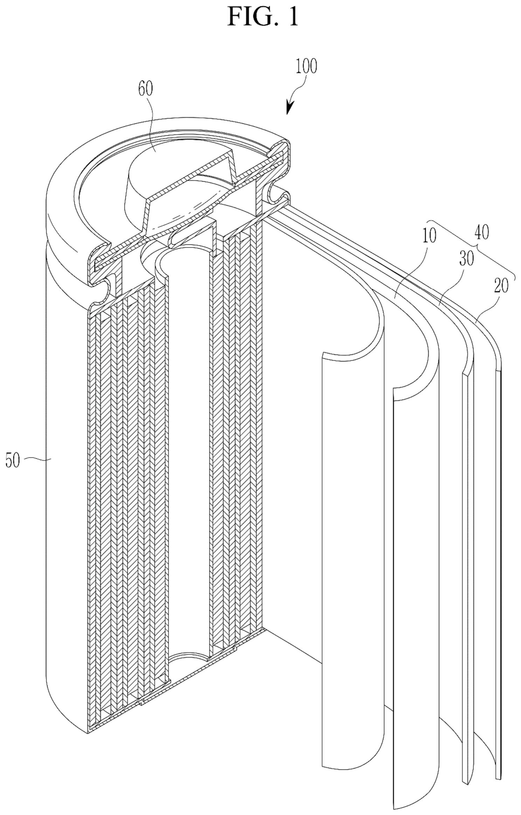

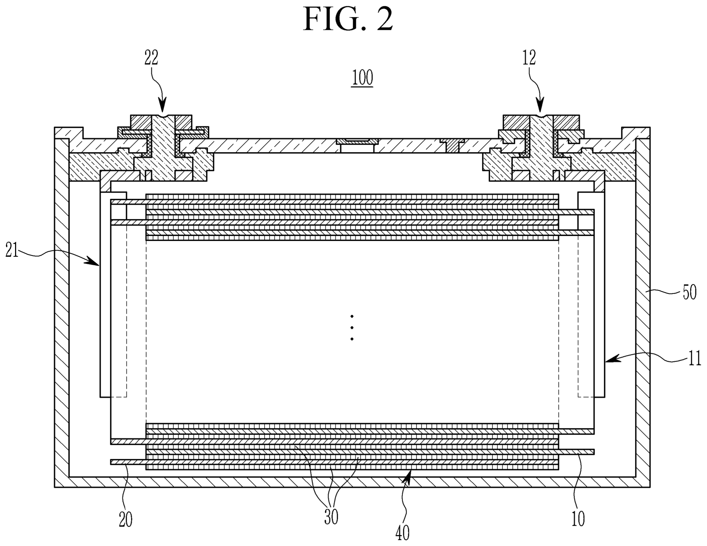

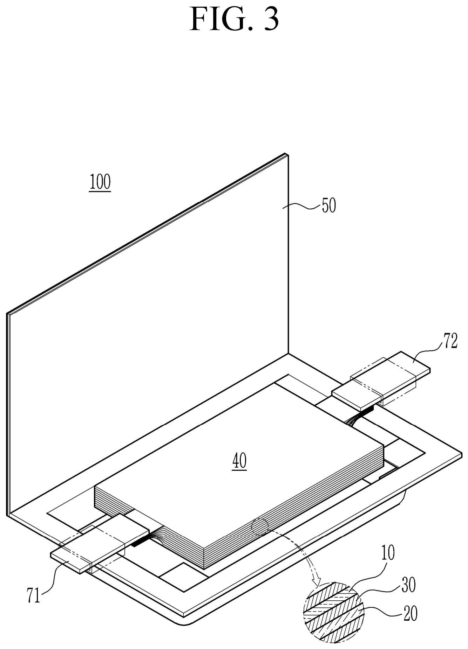

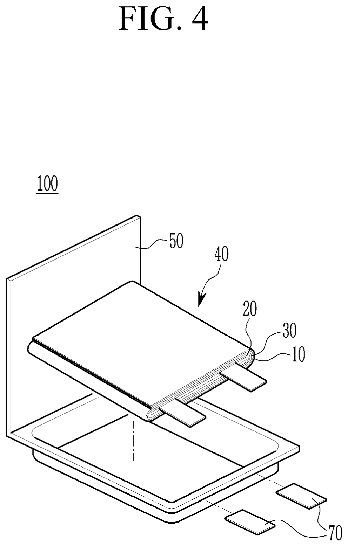

The rechargeable lithium battery may be classified as a cylindrical battery, a prismatic battery, a pouch-shaped battery, a coin-type battery, etc. depending on its shape. FIGS. 1 to 4 are schematic views showing the rechargeable lithium batteries according to some embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 forming an electrical path for inducing the current formed in the electrode assembly 40 to outside of the battery.

### Negative Electrode

The negative electrode for a rechargeable lithium battery includes a negative electrode current collector and a negative electrode active material layer on the negative electrode current collector. The negative electrode active material layer includes a negative electrode active material, and the negative electrode active material layer may further include a binder, a conductive material, or a combination thereof.

The negative electrode current collector is not particularly limited as long as it has conductivity and does not cause a chemical change in the rechargeable lithium battery. In some embodiments, the negative electrode current collector may be a copper foil having a thickness of about 10 µm to about 15 µm.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy, or a combination thereof. In the formula Si-Q, Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surfaces of the silicon particles. For example, the silicon-carbon composite may include a secondary particle (core) in which silicon primary particles are aggregated and an amorphous carbon coating layer (shell) on the surfaces of the secondary particles. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, a silicon amount may be about 10 wt% to about 50 wt% and an amount of amorphous carbon may be about 50 wt% to about 90 wt% based on 100 wt% of the silicon-carbon composite. In addition, when the silicon-carbon composite includes silicon, amorphous carbon, and crystalline carbon, a silicon amount may be about 10 wt% to about 50 wt%, an amount of crystalline carbon may be about 10 wt% to about 70 wt%, and an amount of amorphous carbon may be about 20 wt% to about 40 wt% based on 100 wt% of the silicon-carbon composite.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may be silicon alone, in the form of a silicon alloy, or in an oxidized form of silicon. The oxidized form of silicon may be represented by SiOₓ (0<x≤2). The atomic content ratio of Si:O, which indicates a degree of oxidation, may be about 99:1 to about 33:67. As used herein, when a definition is not otherwise provided, an average particle diameter (D₅₀) indicates the diameter of a particle where a cumulative volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed, the mixing ratio may be a weight ratio of about 1:99 to about 90:10.

The negative electrode active material may be included in an amount of about 90 wt% to about 99.8 wt%, or about 94 wt% to about 99 wt%, based on 100 wt% of the negative electrode active material layer.

The binder serves to adhere the negative electrode active material particles to each other and also to adhere the negative electrode active material to the negative electrode current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the binder in the negative electrode active material, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity and any electrically conductive material that does not cause a chemical change in a secondary battery may be used as a conductive material. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum silver, and the like; a conductive polymer such as a polyphenylene derivative; or a mixture thereof.

An amount of the binder may be about 0.1 wt% to about 5 wt% based on 100 wt% of the negative electrode active material layer. An amount of the conductive material may be about 0.1 wt% to about 5 wt% based on 100 wt% of the negative electrode active material layer.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include nitriles such as R-CN, wherein R is a C2 to C20 linear, branched, or cyclic hydrocarbon group, and may include a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvent may be used alone or in a mixture of two or more types. When two or more types are used in a mixture, a mixing ratio can be appropriately adjusted according to the desired battery performance, which is widely known to artisans in the field.

When using a carbonate-based solvent, a cyclic carbonate and a chain carbonate may be mixed and used. The cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life. Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within this range, the electrolyte solution has appropriate ionic conductivity and viscosity. Thus, excellent performance can be achieved, and lithium ions can move effectively.

### Separator

Depending on the type of the rechargeable lithium battery, a separator may be present between the positive electrode and the negative electrode. The separator may include a polyethylene separator, a polypropylene separator, a polyvinylidene fluoride separator, or a multilayer film of two or more layers thereof such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of a polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (for example, TEFLON^{®}), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer. In another embodiment, a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the present disclosure is not limited to the following examples.

### Example 1

### (1) Preparation of Positive Electrode Active Material

A lithium nickel-based composite oxide in the form of secondary particles having composition of Li₁Ni_{0.90}Co_{0.05}Mn_{0.05}O₂ was prepared. The lithium nickel-based composite oxide had an average particle diameter (D₅₀) of secondary particles of about 10 µm and an average particle diameter (D₅₀) of primary particles forming the secondary particles of about 500 nm.

Multi-walled carbon nanotubes having an average aspect ratio of about 20,000 and an average diameter of about 5 nm and ethyl cellulose as a cellulose-based dispersant in a weight ratio of 1:5 were mixed. Acetonitrile (first solvent) was added thereto to prepare a mixed solution.

Hexane was added to the mixed solution as a second solvent which is not mixed with the first solvent thereby forming a Pickering emulsion according to vortexing and/or sonication methods. Herein, the Pickering emulsion droplets had an average size of about 10 µm. An internal solvent of the Pickering emulsion droplets was the hexane and an external solvent was the acetonitrile. Herein, the first solvent and the second solvent had a volume ratio of 80:20.

The lithium nickel-based composite oxide was added to the Pickering emulsion and then mixed to prepare a mixture. The lithium nickel-based composite oxide, the carbon nanotubes, and the ethyl cellulose had a total amount of 100 wt%, which consisted of 97 wt% of the lithium nickel-based composite oxide, 0.5 wt% of the carbon nanotubes, and 2.5 wt% of the ethyl cellulose, and the mixing was performed by the vortexing method. The lithium nickel-based composite oxide was inserted into the droplets.

Subsequently, fractional distillation was performed at a pressure of 400 mbar and a temperature of 50 °C. As a result of the fractional distillation, the hexane (the internal solvent of the Pickering emulsion droplets) was selectively evaporated.

The lithium nickel-based composite oxide was separated from the mixture by a vacuum filtration method and then heat-treated at 240 °C for 1 hour under an oxygen atmosphere at a pressure of 1 atm to prepare a positive electrode active material. As a result of the heat treatment process, most of the ethyl cellulose remaining on the surface of the lithium nickel-based composite oxide was carbonized. When the carbon nanotubes were randomly arranged the surface of the lithium nickel-based composite oxide in the form of the secondary particles in which the primary particles were aggregated and formed a coating layer that physically interconnects the primary particles, an ethyl cellulose carbide carbonized from the ethyl cellulose was located between lithium nickel-based composite oxide and the carbon nanotubes. However, some uncarbonized ethyl cellulose remained in a small amount on the surface of the lithium nickel-based composite oxide.

The coating layer had 50 wt% of the carbon nanotubes, 40 wt% of the ethyl cellulose carbide, and 10 wt% of the uncarbonized ethyl cellulose remaining there based on 100 wt% of the coating layer.

### (2) Preparation of Positive Electrode

The positive electrode active material, polyvinylidene fluoride as a binder, and Super C 65 (carbon black) as a conductive material were mixed in a weight ratio of 96:2:2 (positive electrode active material:conductive material:binder) to prepare a positive electrode active material composition. This positive electrode active material composition was dispersed in an N-methyl pyrrolidone solvent to prepare a positive electrode active material slurry. The positive electrode active material slurry was coated on a 15 µm-thick Al foil and then dried and compressed to make a positive electrode.

### (2) Preparation of Rechargeable Lithium Battery Cell

97.5 wt% of graphite as a negative electrode active material, 1.5 wt% of carboxymethyl cellulose as a binder, and 1 wt% of a styrene-butadiene rubber were dispersed in distilled water to prepare a negative electrode active material slurry. The negative electrode active material slurry was coated on a 10 µm-thick Cu foil and then dried and compressed to manufacture a negative electrode.

Between the positive electrode and the negative electrode, a 10 µm-thick polyethylene separator was provided to make an electrode assembly. The electrode assembly was inserted into a case and an electrolyte was injected into the case to make a rechargeable lithium battery cell (100 mAh level pouch-shaped cell). The electrolyte was prepared by mixing EC (ethylenecarbonate) : EMC (ethylmethylcarbonate) : DMC (dimethylcarbonate) in a volume ratio of 3:4:3 to prepared a mixed solvent and dissolving 1.0 M LiPF₆ in the mixed solvent.

### Comparative Example 1

A positive electrode and a rechargeable lithium battery cell were made in substantially the same manner as in Example 1 except that the coating layer was not formed on the surface of the lithium nickel-based composite oxide when making the positive electrode active material of Example 1.

### Comparative Example 2

A positive electrode active material, a positive electrode, and a rechargeable lithium battery cell were made in substantially the same manner as in Example 1 except that carboxymethyl cellulose instead of the ethyl cellulose was used as a dispersant in made the positive electrode active material of Example 1.

### Reference Example 1

A positive electrode and a rechargeable lithium battery cell were made in substantially the same manner as in Example 1 except that no coating layer was formed in making the positive electrode active material of Example 1, Super P (carbon black) was added as the conductive material to the lithium nickel-based composite oxide, and the positive electrode active material, the conductive material, and the binder were mixed in a weight ratio of 80:10:10.

### Reference Example 2

A positive electrode and a rechargeable lithium battery cell were made in substantially the same manner as in Example 1 except that a positive electrode active material with no coating layer was made by adding 0.5 wt% of multi-walled carbon nanotubes with the same ratio as the ratio of multi-walled carbon nanotubes added to the lithium nickel-based composite oxide in making the positive electrode active material of Example 1, and the positive electrode was made to equally include the positive electrode active material, the conductive material, and the binder to Example 1 .

### Evaluation Example 1: Evaluation of Half-cell

### (1) Surface Analysis of Positive Electrode Active Material

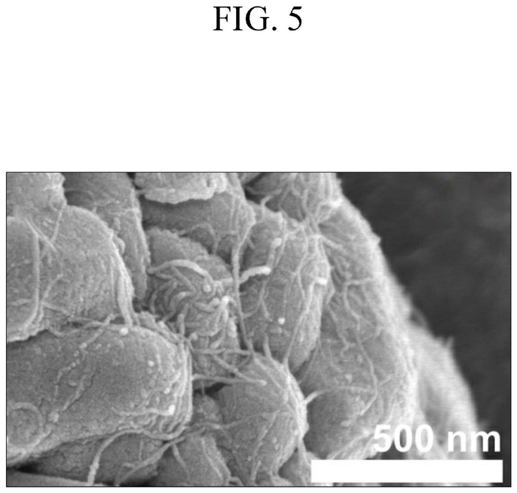

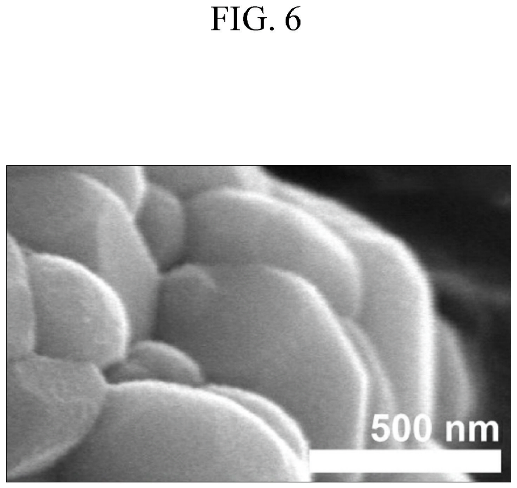

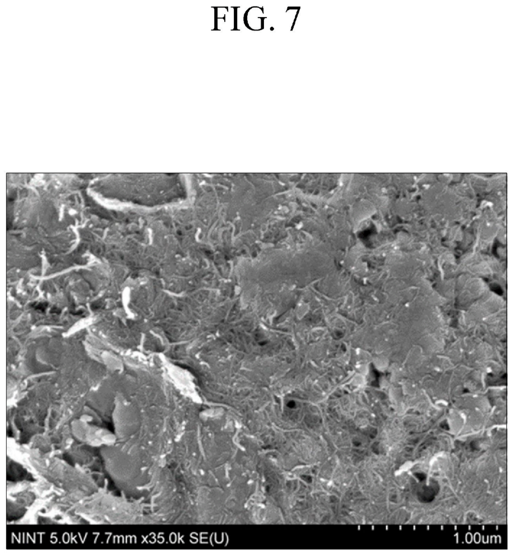

Images of the positive electrode active materials of Example 1 and Comparative Examples 1 and 2 were taken by field emission scanning electron microscopy (FE-SEM). FIG. 5 is an FE-SEM image of the surface of the positive electrode active material particles of Example 1. FIG. 6 is an FE-SEM image of the surface of the positive electrode active material particles of Comparative Example 1 without coating, and FIG. 7 is an FE-SEM image of the surface of the positive electrode active material particles of Comparative Example 2. Referring to FIGS. 5 to 7, the positive electrode active material of Example 1 was confirmed to be coated with carbon nanotubes randomly arranged on the surface and physically interconnecting primary particles. But the coating layer was not formed in positive electrode active material of Comparative Example 1, and in Comparative Example 2 the carbon nanotubes covered the entire surface of the positive electrode active material. That is, the surface of the positive electrode active material of Comparative Example 2, as compared to that of Example 1, was densely covered with the coated carbon nanotubes, carboxymethyl cellulose, and carbides thereof, which will impede movement of lithium ions between the positive electrode active material and the electrolyte.

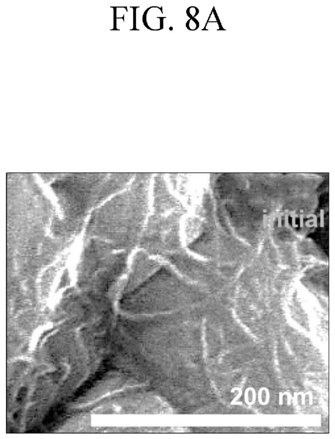

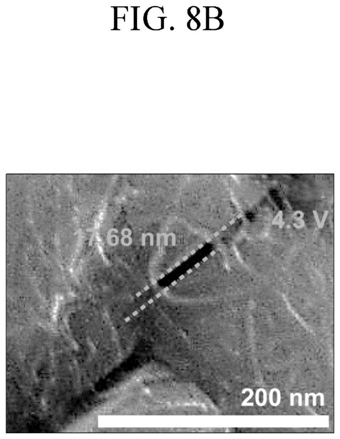

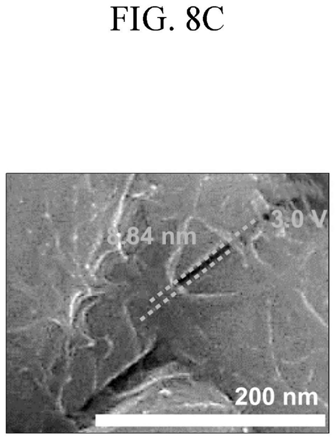

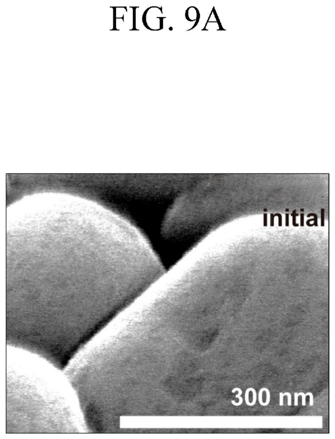

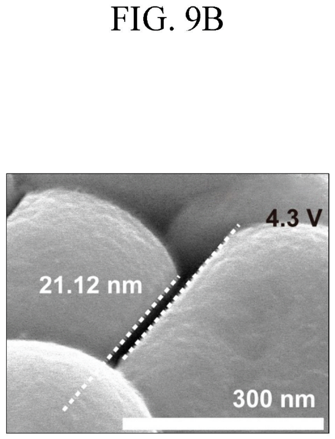

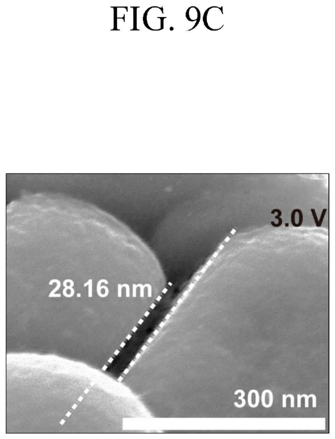

The positive electrode active materials of Example 1 and Comparative Example 1 were charged at a constant current of 0.1 C until reaching 4.3 V, subsequently maintained at a constant voltage of 4.3 V with a cut-off at a current of 0.05 C, and then discharged at a constant current of 0.1 C until reaching 3.0 V at 25°C. Images were taken of positive electrode active materials the Example 1 and Comparative Example 1 before one charge/discharge, after one charge, and after one charge/discharge by field emission scanning electron microscopy (FE-SEM) to measure a distance between primary particles. FIGS. 8A to 8C show FE-SEM photograph (FIG. 8A) of the surface of the positive electrode active material particles of Example 1 before one charge/discharge, FE-SEM photograph (FIG. 8B) of the surface of the positive electrode active material particles of Example 1 after one charge, and FE-SEM photograph (FIG. 8C) of the surface of the positive electrode active material particles of Example 1 after one charge/discharge. FIGS. 9A to 9C show FE-SEM image (FIG. 9A) of the surface of the positive electrode active material particles of Comparative Example 1 before one charge/discharge, FE-SEM image (FIG. 9B) of the surface the positive electrode active material particles of Comparative Example 1 after one charge, and FE-SEM image (FIG. 9C) of the surface the positive electrode active material particles of Comparative Example 1 after one charge/discharge.

Referring to FIGS. 8 A to 8C and 9A to 9C,gaps between primary particles of the positive electrode active material of Example 1 widened to a limited degree before the one charge/discharge, after the one charge, and after the one charge/discharge, but after the one charge/discharge, gaps between the primary particles of the positive electrode active material of Example 1 restored to a level (8.84 nm) close to the level before the one charge/discharge. On the other hand, the positive electrode active material of Comparative Example 1 had a larger gap (21.12 nm) between primary particles after the one charge than the gap (17.68 nm) between primary particles of the positive electrode active material of Example 1 after the one charge. After the one charge/discharge, Comparative Example 1 had a much larger gap (28.16 nm) than that during the one charge and did not have a restoration as in Example 1.

### (2) Evaluation of Cycle-life Characteristics

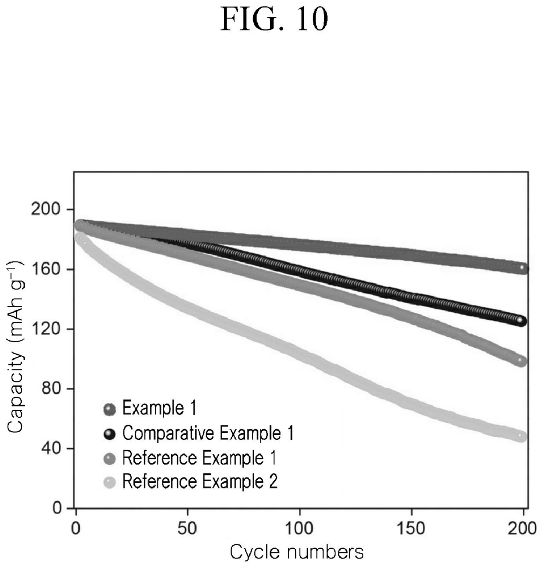

The rechargeable lithium battery cells according to Example 1, Comparative Example 1, and Reference Examples 1 and 2 were charged at a constant current of 0.1 C until reaching 4.3 V, subsequently maintained at a constant voltage of 4.3 V with a cut-off at a current of 0.05 C, and then discharged at a constant current of 0.1 C until reaching 3.0 V at 25°C. Then the examples were charged and discharged 200 times at 1.0 C within a voltage range of 3.0 V to 4.3 V at 25 °C. A capacity change according to the number of cycles is shown in FIG. 10.

Referring to FIG. 10, Example 1 exhibited better battery cycle-life, compared to Comparative Example 1. However, referring to Reference Examples 1 and 2, it was confirmed that Example 1 exhibited better cycle-life not because of an increase in conductivity, but rather because of an elastic framework due to the carbon nanotubes. In view of Reference Example 2 where the carbon nanotubes were not evenly dispersed by simple mixing and therefore did not form the elastic framework.

### (3) Evaluation of Output Characteristics

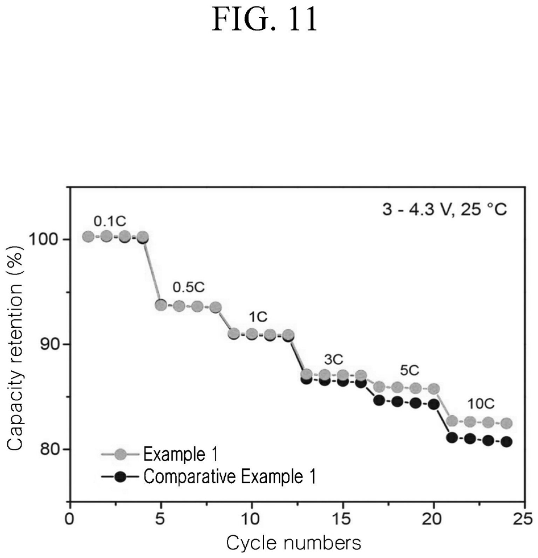

The rechargeable lithium battery cells according to Example 1 and Comparative Example 1 were charged at a constant current of 0.1 C until reaching 4.3 V, subsequently maintained at a constant voltage of 4.3 V with a cut-off at a current of 0.05 C, and then discharged at a constant current of 0.1 C until reaching 3.0 V at 25°C. The above charge and discharge procedure was repeated twice under the same conditions. Then, each charged and discharged four times at 0.5 C, 1 C, 3 C, 5 C, and 10 C within the voltage range of 3 V to 4.3 V to measure capacity retention according to the number of cycles. The results are shown in FIG. 11.

Referring to FIG. 11, Example 1 exhibited much higher capacity retention under high-rate conditions such as 3 C, 5 C, 10 C, and the like. Thus, Example 1 had much better output characteristics than Comparative Example 1.

### (4) Evaluation of Secondary Particle Shape Maintenance

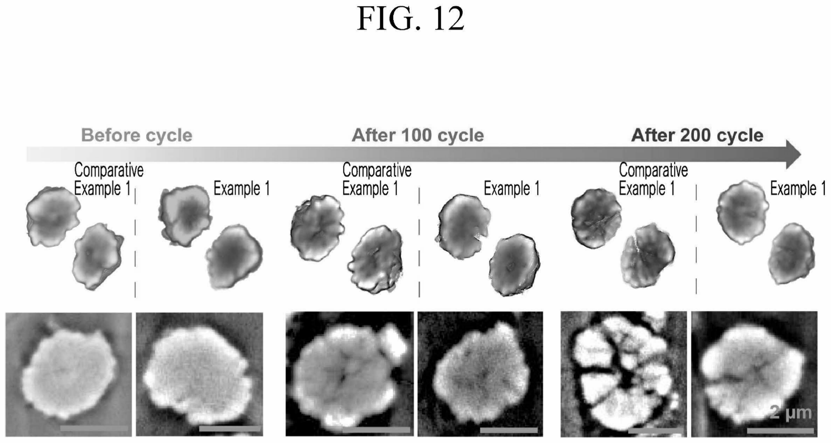

The rechargeable lithium battery cells of Example 1 and Comparative Example 1 were subjected to nano computer tomography (nano CT) before the initial charge/discharge, after 100 charge/discharge cycles, and after 200 charge/discharge cycles to evaluate a particle fracture shape according to the number of cycles. The initial charge/discharge was conducted at a constant current of 0.1 C until reaching 4.3 V, subsequently maintained at a constant voltage of 4.3 V with a cut-off at a current of 0.05 C, and then discharged at a constant current of 0.1 C until reaching 3.0 V at 25 °C. The subsequent charge/discharge cycles were performed at 0.1 C within the voltage range of 3 V to 4.3 V. The results are shown in FIG. 12.

Referring to FIG. 12, Example 1 maintained a circle particle shape even after the 200th charge/discharge cycles much better than Comparative Example 1.

### (5) Evaluation of Particle Crystal Characteristics

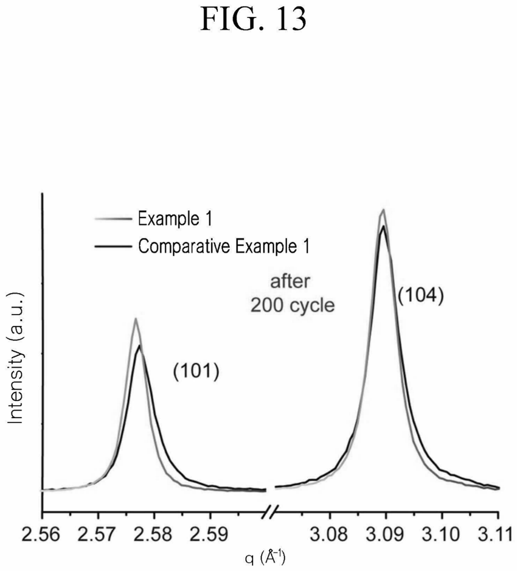

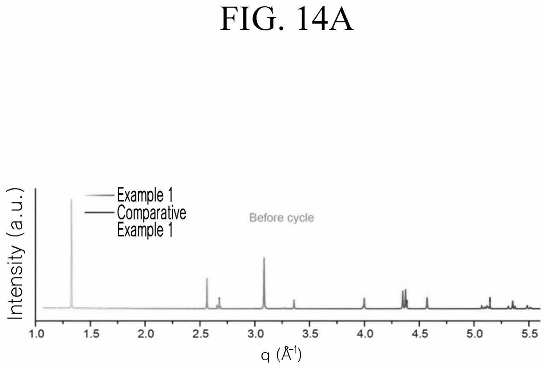

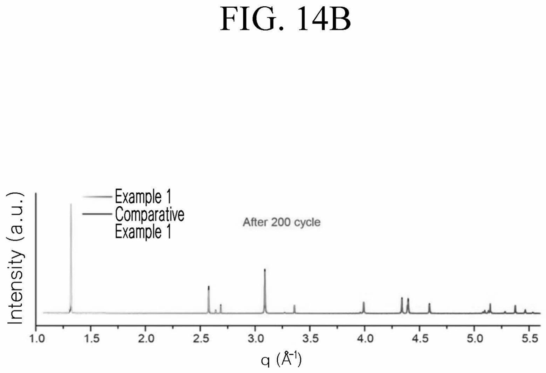

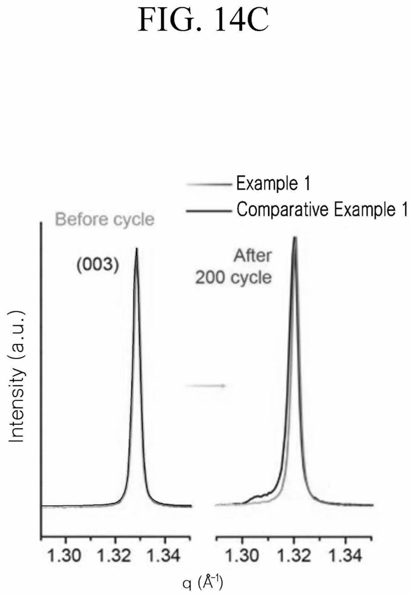

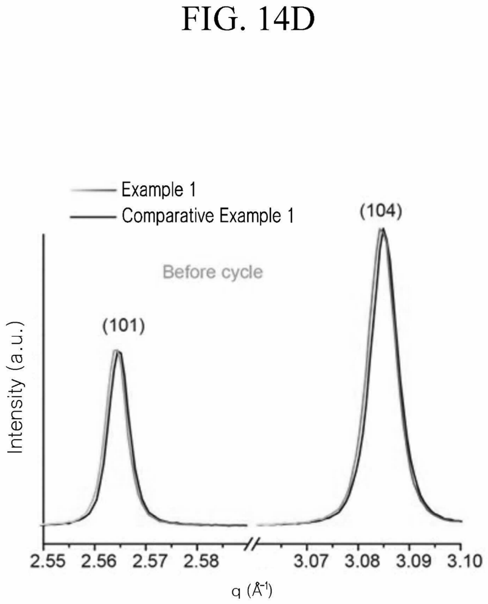

The rechargeable lithium battery cells of Example 1 and Comparative Example 1 were charged at a constant current of 0.1 C until reaching 4.3 V, subsequently maintained at a constant voltage of 4.3 V with a cut-off at a current of 0.05 C, and then discharged at a constant current of 0.1 C until reaching 3.0 V at 25°C. This charge/discharge procedure was repeated for 200 cycles under the same conditions. Then Example 1 and Comparative Example 1 were subjected to high resolution powder diffraction (HRPD) analysis to evaluate a crystal structure of positive electrode active material particles. The results are shown in FIGS. 13 and 14A to 14D.

Referring to FIGS. 13 and 14A to 14D, compared to Comparative Example 1, Example 1 maintained a crystal structure even after long-term charge/discharge. And within the positive electrode active material particles, a uniform electrochemical reaction occurred.

### (6) Evaluation of Transition Metal Elution

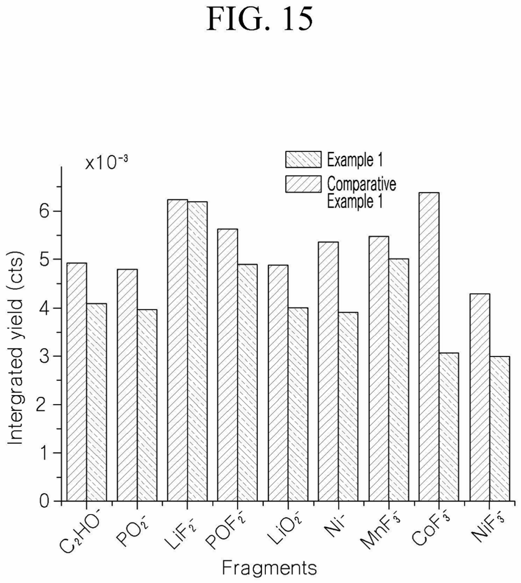

The rechargeable lithium battery cells of Example 1 and Comparative Example 1 were charged at a constant current of 0.1 C until reaching 4.3 V, subsequently maintained at a constant voltage of 4.3 V with a cut-off at a current of 0.05 C, and then discharged at a constant current of 0.1 C until reaching 3.0 V at 25°C. This charge/discharge procedure was repeated for 200 cycles under the same conditions. The Example 1 and Comparative Example 1 were subjected to time of flight-secondary ion mass spectrometry (TOF-SIMS) to analyze components (integrated yield) at surfaces of the positive electrode active material particles. The results are shown in FIG. 15.

Referring to FIG. 15, compared to Comparative Example 1, in Example 1 transition metal ions were less detected in a 2 nm-thick region of the surface of positive electrode active material particles. Thus, it can be seen that the transition metals were less eluted in Example 1.

### (7) Evaluation of Change in Plate Thickness

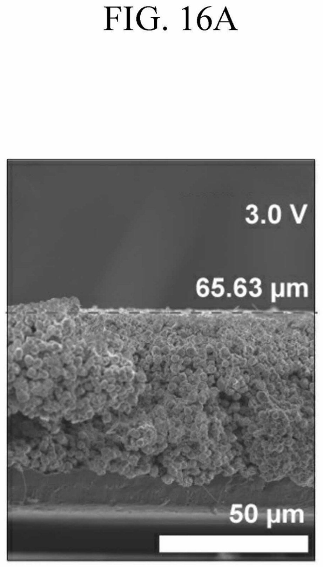

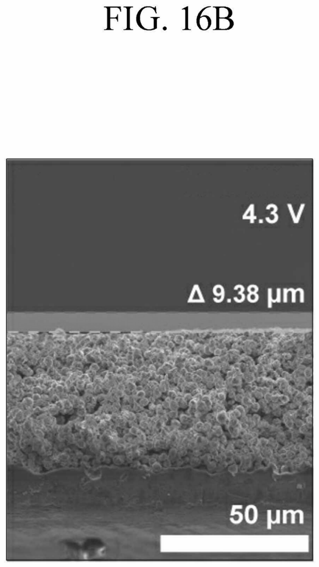

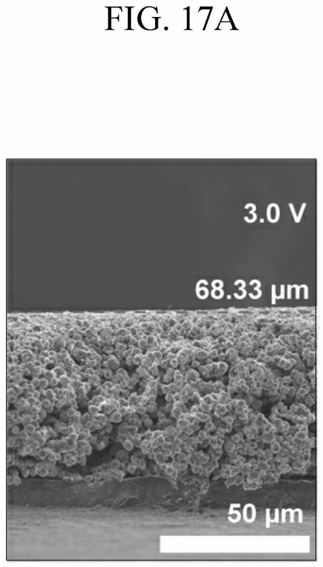

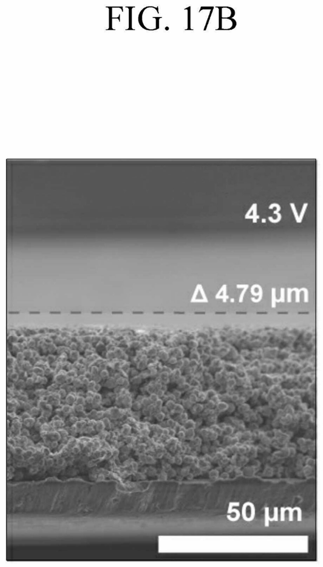

The rechargeable lithium battery cells of Example 1 and Comparative Example 1 were charged at a constant current of 0.1 C until reaching 4.3 V, subsequently maintained at a constant voltage of 4.3 V with a cut-off at a current of 0.05 C, and then discharged at a constant current of 0.1 C until reaching 3.0 V at 25°C. After the charge/discharge procedure, the thickness of each electrode (plate) was measured using a scanning electron microscope. The results are shown in FIGS. 16A and B, and 17A and B. 16A and B are scanning electron microscope photographs showing the electrode thickness of the rechargeable lithium battery manufactured in Comparative Example 1 after charging and discharging. FIGS. 17A and B are scanning electron microscope photographs showing the electrode thickness of the rechargeable lithium battery cell manufactured in Example 1 after charging and discharging.

Referring to FIGS. 16B and 17B, Example 1, compared to the plate of Comparative Example 1, volume change in the plate of Example 1 was suppressed by 50% or more.

### Evaluation Example 2: Evaluation of Full-cell

### (1) Evaluation of Long-term Cycle-life

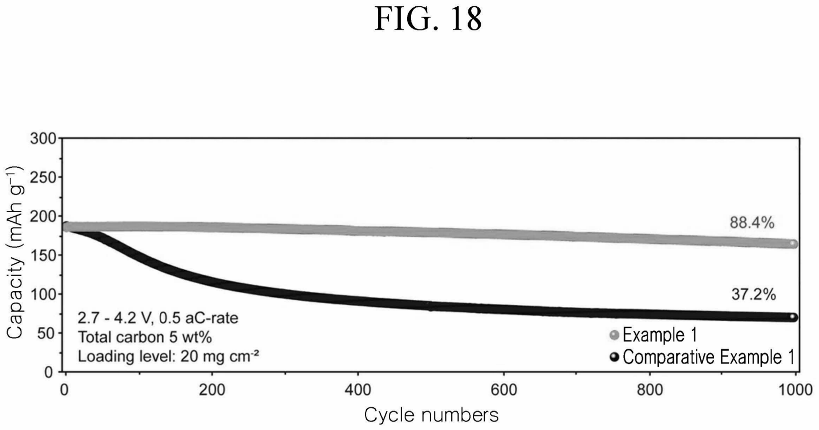

The rechargeable lithium battery cells of Example 1 and Comparative Example 1 were charged at a constant current of 0.1 C until reaching 4.2 V, subsequently maintained at a constant voltage of 4.2 V with a cut-off at a current of 0.05 C, and then discharged at a constant current of 0.1 C until reaching 2.7 V at 25°C. The above charge and discharge procedure was repeated twice under the same conditions. Then, the subsequent 1,000 charge/discharge cycles were performed at 0.5 C within the voltage range of 2.7 V to 4.2 V, and capacity was evaluated as a function of the number of cycles. The results are shown in FIG. 18. The capacity retention after 1,000 cycles calculated based on the discharge capacities shown in FIG. 18.

Referring to FIG. 18, the cycle-life characteristics of Example 1 were improved by about 51% or more after the 1000 cycles compared to Comparative Example 1.

### (2) Evaluation of Long-term Cycle-life at High Current Density

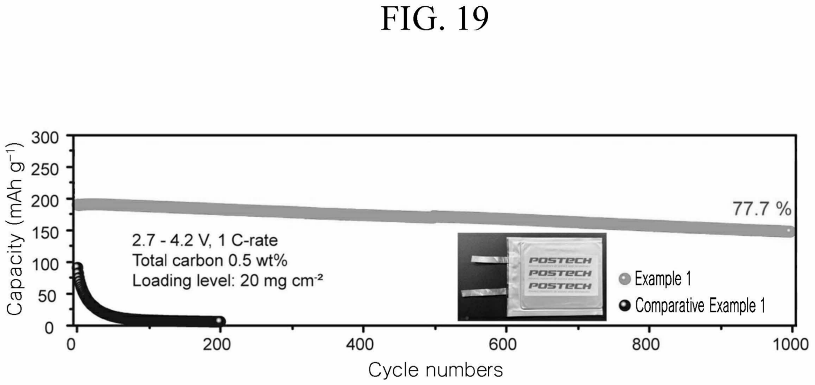

The rechargeable lithium battery cells of Example 1 and Comparative Example 1 were charged at a constant current of 0.1 C until reaching 4.2 V, subsequently maintained at a constant voltage of 4.2 V with a cut-off at a current of 0.05 C, and then discharged at a constant current of 0.1 C until reaching 2.7 V at 25°C. The above charge and discharge procedure was repeated twice under the same conditions. Then, the subsequent 1,000 charge/discharge cycles were performed at 1 C within the voltage range of 2.7 V to 4.2 V, and capacity was evaluated as a function of the number of cycles. The results are shown in FIG. 19. The capacity retention after 1,000 cycles calculated based on the discharge capacities shown in FIG. 19.

Referring to FIG. 19, the capacity of Comparative Example 1 decreased to 0% after 200 charge/discharge cycles. But Example 1 maintained cycle-life characteristics of 77.7% after 1000 charge/discharge cycles.

While this disclosure has been described in connection with what is presently considered to be practical example embodiments, it is to be understood that the disclosure is not limited to the disclosed embodiments. On the contrary, the present disclosure covers various modifications and equivalent arrangements.

**<Description of Symbols>**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material comprising
a lithium nickel-based composite oxide in a form of secondary particles, each of the secondary particles being formed by aggregated primary particles; and
a coating layer on surfaces of the secondary particles and including amorphous carbon and carbon nanotubes;
wherein the carbon nanotubes in the coating layer are randomly arranged on the surfaces of the secondary particles and physically interconnect the primary particles, and
wherein the amorphous carbon in the coating layer is disposed between the secondary particles and the carbon nanotubes.

2. The positive electrode active material as claimed in claim 1, wherein an average particle diameter (D₅₀) of the secondary particles is 2 µm to 20 µm, and an average particle diameter (D₅₀) of the primary particles is less than or equal to 3 µm.

3. The positive electrode active material as claimed in claim 1 or 2, wherein the lithium nickel-based composite oxide is represented by Chemical Formula 1:
Liₐ₁Niₓ₁M¹_{y1}M²_{z1}O_{2-b1}X_{b1}
wherein 0.9≤a1≤1.2, 0.8≤x1<1, 0<y1≤0.2, 0≤z1≤0.2, 0.9≤x1+y1+z1≤1.1, and 0≤b1≤0.1, M¹ and M² are each independently one or more of Al, B, Ba, Ca, Ce, Co, Cr, Cu, Fe, Mg, Mn, Mo, Nb, Si, Sn, Sr, Ti, V, W, Y, Zn, and Zr, and X is one or more of F, P, and S.

4. The positive electrode active material as claimed in any of claims 1-3, wherein in the lithium nickel-based composite oxide, a nickel amount based on 100 mol% of metal excluding lithium is greater than or equal to 80 mol%.

5. The positive electrode active material as claimed in any of the preceding claims, wherein the amorphous carbon comprises a carbide of a cellulose derivative, and
wherein the carbide of the cellulose derivative comprises a carbide of ethyl cellulose, a carbide of acetic cellulose, a carbide of hydroxypropyl cellulose, a carbide of methyl cellulose, a carbide of nitrocellulose, or a combination thereof.

6. The positive electrode active material as claimed in any of the preceding claims, wherein the carbon nanotubes comprises single-walled carbon nanotubes, multi-walled carbon nanotubes, or a combination thereof.

7. The positive electrode active material as claimed in any of the preceding claims, wherein an average diameter of the carbon nanotubes is 1 nm to 50 nm, and
wherein an average aspect ratio of the carbon nanotubes is 100 to 50,000.

8. The positive electrode active material as claimed in any of the preceding claims, wherein the coating layer further comprises a cellulose derivative.

9. The positive electrode active material as claimed in any of the preceding claims, wherein after the positive electrode active material was charged at a constant current of 0.1 C until reaching 4.3 V, subsequently maintained at a constant voltage of 4.3 V with a cut-off at a current of 0.05 C, and then discharged at a constant current of 0.1 C until reaching 3.0 V at 25°C, an average distance between the primary particles at the surfaces of the secondary particles of the positive electrode active material is less than or equal to 20 nm.

10. A method for preparing a positive electrode active material, comprising:
mixing carbon nanotubes, a cellulose-based dispersant, and a first solvent to prepare a mixed solution;
adding a second solvent that does not mix with the first solvent to the mixed solution to form a Pickering emulsion;
adding and mixing a lithium nickel-based composite oxide in a form of secondary particles in which primary particles are aggregated into the Pickering emulsion to prepare a mixture; and
separating a lithium nickel-based composite oxide from the mixture and heat-treating the separated lithium nickel-based composite oxide.

11. The method as claimed in claim 10, wherein the cellulose-based dispersant comprises ethyl cellulose, cellulose acetate, hydroxypropyl cellulose, methyl cellulose, nitrocellulose, or a combination thereof,
wherein the first solvent comprises acetonitrile, heptane, water, acetic acid, methanol, ethanol, acetone, dimethyl sulfoxide, benzene, hexane, chloroform, toluene, or a combination thereof, and
wherein the second solvent comprises hexane, heptane, acetonitrile, cyclohexane, isooctane, pentane, water, benzene, chloroform, or a combination thereof.

12. The method as claimed in claim 10 or 11, wherein after the adding and mixing of the lithium nickel-based composite oxide to prepare the mixture and before the separating of the lithium nickel-based composite oxide from the mixture and heat-treating the separated lithium nickel-based composite oxide, the method comprises removing an internal solvent of Pickering emulsion droplets through fractional distillation, and
wherein the fractional distillation is performed at a pressure of 100 mbar to 800 mbar and a temperature of 30 °C to 100 °C.

13. The method as claimed in any of claims 10-12, wherein the heat-treating is performed at a temperature of 150 °C to 800 °C under a vacuum or specific gas atmosphere of oxygen, argon, air, or nitrogen.

14. A positive electrode comprising:
a positive electrode current collector, with a positive electrode active material layer provided on the positive electrode current collector, and with the positive electrode active material layer including a positive electrode active material as claimed in any of claims 1-9.

15. A rechargeable lithium battery comprising:
the positive electrode as claimed in any of claims 1-9;
a negative electrode; and
an electrolyte.
